**Europäisches Patentamt**

**European Patent Office**

**Office européen des brevets**

(11) Veröffentlichungsnummer: **0 102 919**

**A2**

## (12) EUROPÄISCHE PATENTANMELDUNG

(21) Anmeldenummer: **83810283.8**

(22) Anmeldetag: **24.06.83**

(51) Int. Cl.³: **F 16 L 47/00**
**B 29 C 27/00**

(30) Priorität: **30.08.82 CH 5146/82**

(43) Veröffentlichungstag der Anmeldung:
**14.03.84 Patentblatt 84/11**

(84) Benannte Vertragsstaaten:
**AT BE CH DE FR GB IT LI LU NL SE**

(71) Anmelder: **HUBER & SUHNER AG KABEL-,
KAUTSCHUK-, KUNSTSTOFF-WERKE
Degersheimer Strasse 14
CH-9100 Herisau(CH)**

(72) Erfinder: **Meier, Ueli
Oberdorfstrasse 135
CH-9100 Herisau(CH)**

(72) Erfinder: **Müller, Hans
Saumstrasse 10
CH-9100 Herisau(CH)**

(72) Erfinder: **Signer, Gerold
Obere Espen
CH-9630 Wattwil(CH)**

(72) Erfinder: **Wiss, Martin
Wiggenrainstrasse 30
CH-9400 Rorschacherberg(CH)**

(74) Vertreter: **White, William et al,
c/o Patentanwaltsbureau ISLER & SCHMID
Walchestrasse 23
CH-8006 Zürich(CH)**

(54) Verfahren zum Verbinden von Rohren und danach hergestellte Rohrverbindung.

(57) Zum Verbinden zweier Rohre aus vernetztem Kunststoff wird der Effekt ausgenützt, dass sich der Kunststoff bei einer Temperatur über dem Kristallschmelzpunkt plastisch verformen lässt und die erzwungene Form nach dem Erkalten beibehält, aber bei erneutem Erwärmen sich in die ursprüngliche Form zurückverformt. So wird bei zwei Rohren (1, 2) am einen Rohrende eine Muffe (10) angeformt, darauf das zweite Rohr (2) in die Muffe hineingestossen. Durch Erwärmen über die Kristallschmelztemperatur wird schliesslich die Muffe (10) auf das andere Rohr (2) aufgeschrumpft. Für eine Verstärkung der Verbindung kann wenigstens das eine Rohr (2) mit umlaufenden Rillen (21) versehen werden und/oder zwischen die Rohre kann ein Klebstoff eingebracht werden.

Fig. 1

Fig. 2

EP 0 102 919 A2

- 1 -

Verfahren zum Verbinden von Rohren und danach hergestellte
Rohrverbindung

Die vorliegende Erfindung betrifft ein Verfahren zum Verbinden von Rohren nach dem Oberbegriff des unabhängigen
Patentanspruchs 1 sowie eine Rohrverbindung, hergestellt nach
dem Verfahren gemäss dem Oberbegriff des unabhängigen Patentanspruchs 10.

Zum Verbinden von Rohren, insbesondere von Kunststoffrohren
ist es bekannt, am einen Rohrende eine Steckmuffe anzuformen
und das andere Ende eines zweiten Rohres in dieser Steckmuffe
dichtend zu haltern.

Bei Rohren aus thermoplastischem Kunststoff ist es gemäss der
CH-A 504 642 bekannt, in die Muffe eine Heizdrahtwendel einzubauen, um die Muffe mit dem darin untergebrachten Rohrende bis über die Schmelztemperatur zu erwärmen und dadurch die beiden Rohrenden dicht miteinander zu verbinden. Um den Aufwand einer Heizwendel zu umgehen, wurde in der CH-A 533 794 vorgeschlagen, in der Muffe eine umlaufende Innennut vorzusehen, die über eine Oeffnung mit der Umwelt verbunden ist. Diese Nut wird mit einer explosionsfrei selbstverbrennenden zündbaren Masse gefüllt, die genügend Wärme erzeugt, um die beiden Rohre auf Schmelztemperatur zu erwärmen und dadurch dicht zu verbinden.

Wenn jedoch Rohre aus vernetztem Kunststoff verwendet werden, ist eine Schmelzverbindung durch Schweissung nicht mehr möglich. Die Rohre werden dann in der Regel durch Schraub- und Klemmverbindungen miteinander verbunden. Diese Verbindungen haben die bekannten Nachteile, dass ein Gewinde geschnitten werden muss, wodurch sich die teure Arbeitszeit verlängert, insbesondere bei Heizungsanlagen mit Boden- und/oder Deckenheizung oder bei sanitären Installationen.

Es ist deshalb eine Aufgabe der Erfindung ein Verfahren anzugeben, wonach sich Rohre dicht miteinander verbinden lassen, ohne an die Rohre auf dem Bauplatz ein Gewinde schneiden zu müssen, oder dann die bezüglich thermischer Standfestigkeit oder bezüglich Spannungsrisskorosion weniger gut geeigneten Rohre aus unvernetztem Kunststoff verwenden zu müssen.

Erfindungsgemäss wird dies mit einem Verfahren durch die Merkmale im kennzeichnenden Teil des unabhängigen Patentanspruchs 1 erreicht. Eine nach dem Verfahren hergestellte Rohrverbindung ist im Patentanspruch 10 gekennzeichnet.

Die Erfindung benützt den Umstand, dass wenn vernetzte Kunststoffe, z.B. Polyolefine, oberhalb der Kristallschmelztemperatur verformt und dann wieder unter diese Temperatur gekühlt werden, die Form beibehalten. Nach erneuter Erwärmung über die Kristallschmelztemperatur nehmen sie die ursprüngliche Form wieder an. Diese Kunststoffe weisen somit eine bistabile Eigenschaft auf, die lediglich durch Erwärmen auf eine höhere Temperatur als die Kristallschmelztemperatur in einer der beiden Zustände verharren kann.

Anhand einiger Ausführungsbeispiele in der Zeichnung wird die Erfindung nachfolgend erläutert.

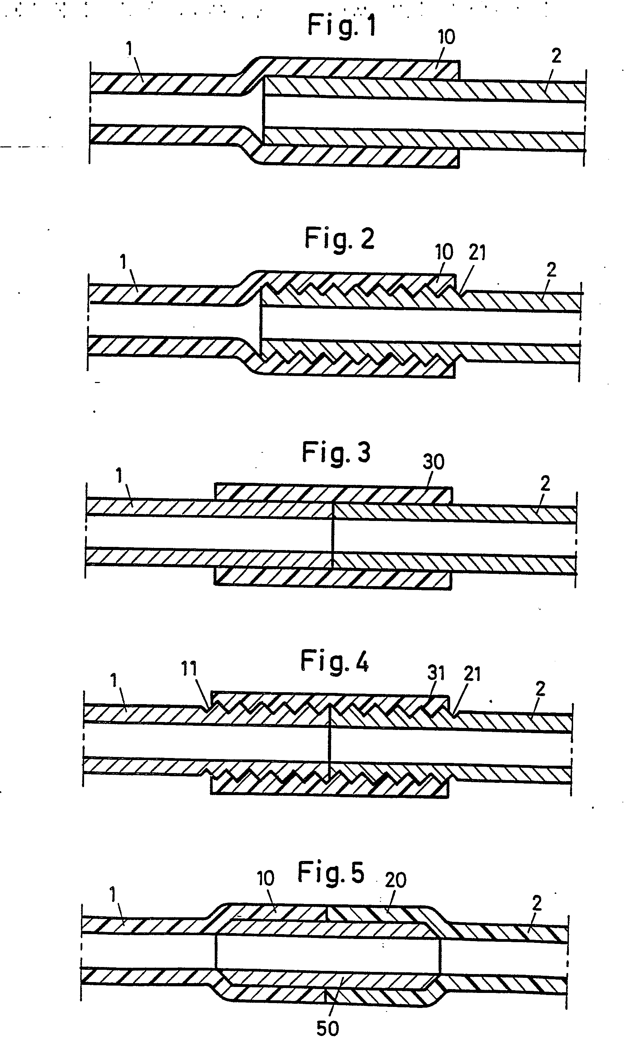

Fig. 1 bis 9 zeigen je eine Schnittansicht einer Rohrverbindung. Dabei wurde jeweils das gemäss der Erfindung durch Erwärmung ausgeweitete Rohr bzw. Rohrende oder Rohrstück mit dicken und dünnen Linien schraffiert und quasi als Kunststoff dargestellt. Alle übrigen, an einer Rohrverbindung beteiligten Elemente sind mit gleichmässig dicken Strichen schraffiert, auch zur Darstellung, dass es sich um irgendein Material handeln kann, aber insbesondere auch um vernetzten Kunststoff.

Im einzelnen betrachtet, zeigt Fig. 1 eine Rohrverbindung für die Leitung von Flüssigkeit mit niedrigem Druck, wie beispielsweise bei Fussbodenheizungen. Dazu wird das Rohrende 10 des Rohres 1 mit einem dornähnlichen Werkzeug entweder kalt oder warm, vorzugsweise oberhalb der Kristallschmelztemperatur ausgeweitet und dann in ausgeweitetem Zustand abgekühlt. Das nicht ausgeweitete Rohr 2 wird in die angeformte Muffe 10 hineingesteckt und durch Erwärmen über die Kristallschmelztemperatur wird die Muffe 10 aufgeschrumpft, so dass die beiden Rohrenden miteinander dicht verbunden sind.

Die Verbindung gemäss Fig. 1 lässt sich verstärken, wenn gemäss Fig. 2 wenigstens an einem Rohr, z.B. das Rohr 2, in der Aussenfläche Rillen 21 eingeschnitten werden. Das ausgeweitete Rohrende 10 wird dann beim erneuten Erwärmen in die Rillen 21 hineingreifen und eine kraftschlüssige Verbindung bilden. Selbstverständlich könnten die Rillen auch in die Innenwand des Rohres 1 geschnitten werden, oder es könnten formgleiche Profile in die Aussenwand des Rohres 2 und in die Innenwand des Rohres 1 geschnitten werden.

Anstelle von angeformten Muffen 10 können auch separate Muffen 30, 31 gemäss Fig. 3 und 4 verwendet werden. Dabei können die

- 5 -

Rohrenden der Rohre 1, 2 stumpf aufeinandergestossen werden. Ueber die Stossstelle wird eine ausgeweitete Muffe 30 geschoben und durch Erwärmung über die Kristallschmelztemperatur geschrumpft. Auch hier könnten in die Rohrenden der Rohre 1 und 2 Rillen 11, 21 geschnitten werden, wie Fig. 4 zeigt, oder die Rillen könnten analog zu Fig. 2 auch innenseitig in die Muffen geschnitten sein, oder es könnten formgleiche Rillen in die Muffe und in die Rohrenden geschnitten werden.

Eine weitere Variante zeigt Fig. 5. Hier haben beide Rohre 1, 2 erfindungsgemäss angeformte Muffen 10, 20, die durch Erwärmen über die kristallschmelztemperatur auf eine Tülle 50 aufgeschrumpft sind. Auch hier sind Rillen in der Tülle und/ oder in den Rohrenden denkbar, wie sie weiter oben beschrieben wurden. Die Tülle kann ein Rohrabschnitt der Rohre 1, 2 sein, oder aus einem artfremden Material, wie einem Chromstahl, bestehen.

Bei allen fünf beschriebenen Ausführungsformen kann die Schrumpfverbindung durch einen Klebstoff, z.B. einen Schmelzkleber, wie ein Polyamid-Schmelzkleber oder ein härtbarer Schmelzkleber, wie ein Thermoplast, mit Peroxid verstärkt werden. Auch könnte eine Verschweissung mit Peroxid vorgesehen sein.

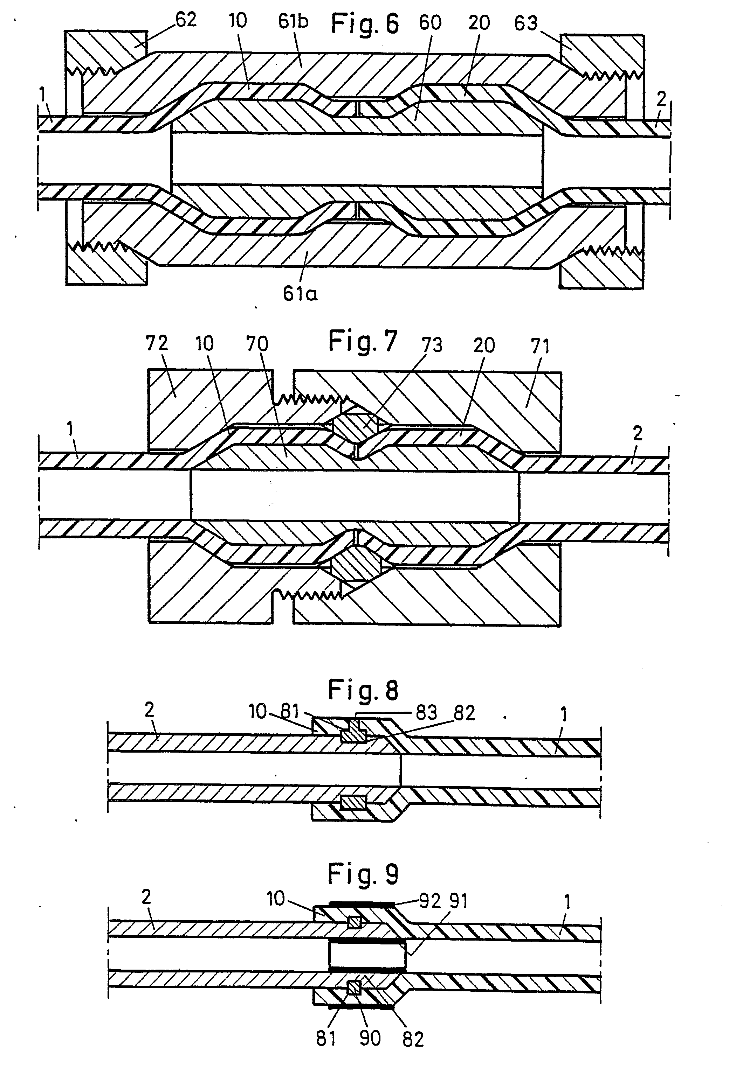

In den Fig. 6 und 7 sind zwei Beispiele für Rohrverbindungen, die einer hohen Zugbeanspruchung und/oder einem hohen Druck der Flüssigkeit widerstehen.

An beiden Rohren 1, 2 wurden Muffen 10, 20 gemäss den weiter oben beschriebenen Beispielen angeformt. Diese Muffen 10, 20 werden zur Herstellung der Verbindung über eine mit einer mittig angeordneten Einschnürung versehenen Stütztülle 60, 70 geschoben und über die Kristallschmelztemperatur erwärmt, wodurch sich die Rohrenden eng an die Stütztülle 60, 70 anschmiegen.

Ueber diese Verbindung wird dann gemäss Fig. 6 eine zweiteilige Klemmbride 61a, 61b mit einer zur Einschnürung in der Stütztülle 60 komplementären Form gelegt und mittels Fixiermuttern 62, 63 zusammengepresst. Eine derartige Verbindung widersteht hohen Belastungen. Anstelle der zweiteiligen Klemmbride 61a, 61b könnte auch hier ein ausgeweitetes Rohrstück über die Verbindung geschoben und dann durch Erwärmen aufgeschrumpft werden.

Gemäss Fig. 7 ist die zweiteilige Klemmbride in Fig. 6 durch eine Klemmutter 71, die auf eine einstückige Klemmbride 72 geschraubt ist, ersetzt. Zwischen Klemmutter 71 und Klemmbride 72 ist ein Hohlraum gebildet, der zur Aufnahme einer Dichtung 73 dient.

Als weitere Variante ist in Fig. 8 eine einfache Schrumpfverbindung ähnlich derjenigen gemäss Fig. 1 dargestellt. Das Rohr 1
besitzt eine angeformte Muffe 10, die auf das Rohr 2 aufgeschrumpft ist. Im Unterschied zur Verbindung nach Fig. 1 weist
jedes Rohr 1, 2 eine umlaufende Nut 81, 82 auf und zwar ist
die Nut 81 innenseitig am Rohr 1 und die Nut 82 aussenseitig
am Rohr 2 angeordnet. Die innenseitige Nut 81 ist durch eine
Bohrung 83 mit der Umwelt verbunden. Diese Bohrung 83 dient
zum Ausgiessen der beiden kommunizierenden Nuten 81, 82 mit
einem härtenden Kunststoff zur Bildung einer Gegenhalterung
bei Zugbeanspruchung.

Gemäss einer leichten Abwandlung dieser Anordnung ist in
Fig. 9 eine fast gleich aufgebaute Verbindung dargestellt.
Es sind hier auch zwei Rohre 1, 2, von denen das Rohr 1 mittels
einer angeformten Muffe 10 auf das Rohr 2 geschrumpft ist.
Das Rohr 1 weist eine innenseitige Nut 81 und das Rohr 2 eine
aussenseitige Nut 82 auf. Es ist vorgesehen, einen Federring
90 in die Nuten 81, 82 einzulegen, um Zugkräfte vom einen Rohr
auf das andere zu übertragen. Damit die Rohrenden nicht durch
die Elastizität des Materials bedingt ausweichen und den
Federring 90 überspringen können, sind eine Tülle 91 und eine
Hülse 92 vorgesehen, durch die die beiden Rohrenden gegeneinander gepresst sind.

Jede Stütztülle 50 in Fig. 5, 60 in Fig. 6 oder 70 in Fig. 7
könnte aus einem Kunststoff oder aus Keramik oder aus einem
Metall bestehen, je nach dem Fluid, das durch die Rohrverbindung fliesst.

Als Variante zur zweiteiligen Klemmverbindung gemäss Fig. 7,
bestehend aus Klemmutter 71 und Klemmbride 72 könnte auch
eine ausgeweitete einstückige Muffe ähnlich den Ausführungsformen gemäss Fig. 3 und 4 vorgesehen sein, die sich nach
erneutem Erwärmen über die Kristallschmelztemperatur über die
beiden Rohrenden legt und diese ähnlich wie ein Schrumpfschlauch zusammenpresst.

Patentansprüche

1. Verfahren zum Verbinden von Rohren, dadurch gekennzeichnet, dass eine Muffe (10, 20, 30, 31) aus vernetztem Kunststoff mit wenigstens angenähert gleicher lichter Weite
und ebensolchem Aussendurchmesser, wie das allenfalls
kleinere Rohr der zu verbindenden Rohre (1, 2) auf eine
lichte Weite ausgeweitet wird, die grösser ist als der
Aussendurchmesser des allenfalls grösseren Rohres, dass
nach dem Zusammensetzen der Rohre innerhalb der Muffe
(10, 20, 30, 31) diese letztere bis über die Kristallschmelztemperatur  erwärmt und danach auf Umgebungstemperatur gekühlt wird.

2. Verfahren nach Patentanspruch 1, dadurch gekennzeichnet,
dass die Muffe (30, 31) ein Rohrstück ist (Fig. 3, 4).

3. Verfahren nach Patentanspruch 1, dadurch gekennzeichnet,
dass bei Verwendung von Rohren aus vernetztem Kunststoff
die Muffe (10, 20) an einem der beiden zu verbindenden Rohre (1, 2) durch Ausweiten des Rohrendes angeformt wird und dass das Rohrende des andern Rohres (2) in das ausgeweitete Rohrende hineingeschoben wird.

4. Verfahren nach Patentanspruch 1, dadurch gekennzeichnet, dass bei Verwendung von Rohren aus vernetztem Kunststoff an beiden Enden der zu verbindenden Rohre (1, 2) je eine Muffe durch Ausweiten der Rohrenden angeformt wird, und dass die beiden ausgeweiteten Rohrenden über eine Tülle (50, 60, 70) geschoben werden.

5. Verfahren nach Patentanspruch 4, dadurch gekennzeichnet, dass die Tülle (60, 70) bei jedem Rohrende wenigstens eine umlaufende wulstartige Verdickung aufweist, dass nach dem Aufschieben der Rohre (1, 2) auf die Tülle (60, 70) nach dem Erwärmen über die Kristallschmelztemperatur und nachfolgendem Abkühlen, eine die Rohrverbindung auf dem ganzen Umfang umfassende Klemmbride (61a, 61b) angebracht wird.

6. Verfahren nach Patentanspruch 5, dadurch gekennzeichnet, dass die Klemmbride (61a, 61b) zweiteilig aus zwei Halbschalen besteht, deren beide Aussenpartien beidseitig je ein Gewinde zum Aufschrauben einer Spannmutter (62, 63) aufweisen.

7. Verfahren nach Patentanspruch 5, dadurch gekennzeichnet, dass eine Dichtung (73) auf die zwischen den Verdickungen liegenden Rohre (1, 2) gelegt ist und dass einerseits eine Klemmbride (72) mit Aussengewinde und anderseits eine Fixiermutter (71) zum Anpressen der Dichtung (73) vorhanden sind.

8. Verfahren nach einem der vorangehenden Patentansprüche 1 bis 7, dadurch gekennzeichnet, dass die Muffe (10, 20, 30, 31) durch Erwärmen des Kunststoffes über die Kristallschmelztemperatur, nachfolgendem Ausweiten und anschliessendem Abkühlen im ausgeweiteten Zustand hergestellt wird.

9. Verfahren nach einem der vorangehenden Patentansprüche 1 bis 8, dadurch gekennzeichnet, dass als vernetzter Kunststoff ein Polyolefin verwendet ist.

10. Rohrverbindung hergestellt nach dem Verfahren nach Patentanspruch 1, dadurch gekennzeichnet, dass zwischen der Innenfläche der Muffe und der Aussenfläche der Rohrenden oder der Tülle eine Klebstoffschicht vorhanden ist.

11. Rohrverbindung hergestellt nach dem Verfahren nach Patentanspruch 1, dadurch gekennzeichnet, dass wenigstens eine Oberfläche der aufeinanderliegenden Partien von Muffe (31), Rohrende (10) und/oder Tülle (50) als gerillte oder gerippte Fläche (21) ausgebildet ist (Fig. 2, 4, 5).

12. Rohrverbindung nach einem der Patentansprüche 10 oder 11, dadurch gekennzeichnet, dass in der Muffe (10) einerseits und im Rohr (2) anderseits je wenigstens eine umlaufende Nut (81, 82) vorhanden ist, welche beiden Nuten (81, 82) aufeinander ausrichtbar sind, und dass ein Mittel zur Aufnahme von Zugkräften in die Nuten eingesetzt ist.

13. Rohrverbindung nach Patentanspruch 12, dadurch gekennzeichnet, dass das Mittel zur Aufnahme von Zugkräften ein Ring (90) ist (Fig. 9).

14. Rohrverbindung nach Patentanspruch 13, dadurch gekennzeichnet, dass der Ring aus kalthärtendem Kunststoff besteht (Fig. 8).

15. Rohrverbindung nach Patentanspruch 12, dadurch gekennzeichnet, dass das Mittel zur Aufnahme von Zugkräften ein Federring ist.

16. Rohrverbindung nach einem der Patentansprüche 12 bis 15, dadurch gekennzeichnet, dass sie wenigstens innenseitig eine metallische Verstärkung (91, 92) aufweist (Fig. 9).

17. Rohrverbindung nach einem der Patentansprüche 1 bis 4 und 8-15, dadurch gekennzeichnet, dass sie eine Verstärkung aus einer Tülle (91) und einer Sicherungshülse (92) aufweist.

18. Rohrverbindung nach Patentanspruch 1, dadurch gekennzeichnet, dass zwischen Muffe und Rohrende ein organisches Peroxid vorhanden ist.

## Fig. 1

## Fig. 2

## Fig. 3

## Fig. 4

## Fig. 5

Fig. 6

62    10    61b    60    20    63

1

2

61a

Fig. 7

72    10    70    73    20    71

1

2

Fig. 8

2    10  81    83  82    1

Fig. 9

2    10    92 91    1

81    90    82